# EUROPÄISCHE PATENTSCHRIFT

(11) **EP 0 826 650 B1**
(45) Veröffentlichungstag und Bekanntmachung des Hinweises auf die Patenterteilung: **13.10.1999**
(21) Anmeldenummer: 97114437.3
(22) Anmeldetag: 21.08.1997
(51) Int. Cl.: C04B 41/49, C04B 111/25, C04B 111/27

(54) **Zusammensetzungen für die wasser- und ölabweisende Behandlung saugfähiger Materialien**
Compositions for water and oil repellency treatment of absorbent materials
Compositions pour le traitement hydrophobe et oléophobe de matériaux absorbants

(30) Priorität: 26.08.1996 DE 19634500
(43) Veröffentlichungstag der Anmeldung: 04.03.1998
(73) Patentinhaber: Wacker-Chemie GmbH, 81737 München (DE)
(72) Erfinder: Hager, Rudolf, Dr., 84503 Altötting (DE); Eberharter, Elke, 84489 Burghausen (DE)
(74) Vertreter: Fritz, Helmut, Dr.

(56) Entgegenhaltungen:
- EP-A- 0 412 516
- WO-A-92/19671
- FR-A- 2 639 353
- GB-A- 1 155 741
- US-A- 5 226 954

## Beschreibung

Gegenstand der Erfindung sind wäßrige Zusammensetzungen für die öl- und wasserabweisende Behandlung saugfähiger Materialien, im wesentlichen bestehend aus siliciumorganischen Verbindungen, fluororganischen Verbindungen, Tensid und Wasser, sowie ein Verfahren für die wasser- und ölabweisende Behandlung saugfähiger Materialien.

Schon seit langem werden siliciumorganische Verbindungen für die wasserabweisende Imprägnierung von mineralischen Baustoffen eingesetzt.

Fluororganische Verbindungen sind bekannt für ihre ölabweisenden Eigenschaften. Sie besitzen zwar zudem auch wasserabweisende Eigenschaften, diese sind aber wesentlich weniger ausgeprägt und weniger langzeitbeständig als die der üblicherweise für Hydrophobierzwecke von Baustoffen verwendeten siliciumorganischen Verbindungen.

Aus diesem Grunde hat es sich als zweckmäßig erwiesen, beide Substanzklassen zu kombinieren. In US-A-4,125,673 und US-A-5,399,191 sind Verfahren zum Öl- und Wasserabweisendmachen von Baustoffen mit solchen Kombinationsprodukten aus siliciumorganischen und fluororganischen Verbindungen beschrieben.

Ein Nachteil des in US-A-4,125,673 beschriebenen Verfahrens ist, daß bei den genannten Einsatzstoffen entweder organisches Lösemittel als Trägermedium erforderlich ist oder - im Falle wäßriger Systeme - nur wasserlösliche Silane oder Siliconate eingesetzt werden können. Im wäßrigen Milieu haben Silane den Nachteil, daß sie nur sehr begrenzt und für kurze Zeit wasserlöslich sind. Siliconate dagegen sind einerseits hoch alkalisch und damit nicht ungefährlich in der Handhabung, andererseits aufgrund ihrer Salznatur nur bedingt einsetzbar. In US-A-5,399,191 werden diese Schwierigkeiten umgangen, indem spezielle ammoniumfunktionelle siliciumorganische Verbindungen eingesetzt werden, die wasserlöslich oder wasserdispergierbar sind. Diese Zusammensetzungen haben jedoch den Nachteil, daß ihre Herstellung aufwendig ist und die ammoniumfunktionellen Polysiloxane mit zahlreichen fluororganischen Komponenten unverträglich sind, bzw. aufgrund von polaren Wechselwirkungen die Filmbildung der fluororganischen Komponente stören.

FR-A-2 639 353 beschreibt Zusammensetzungen bestehend aus emulgierten siliciumorganischen und fluororganischen Verbindungen. Diese Zusammensetzungen enthalten aber neben der wasserabweisenden siliciumorganischen und ölabweisenden fluororganischen Komponente noch organische Polymerdispersion, die der Stabilisierung der Zusammensetzung dient. Nachteil dieser Komponente ist, daß sie der Zusammensetzung Beschichtungscharakter verleiht, womit u.a. die Wasserdampfdurchläßigkeit stark reduziert wird.

Aufgabe der vorliegenden Erfindung war es, wäßrige Zusammensetzungen von siliciumorganischen und fluororganischen Verbindungen bereitzustellen, die vorstehende Nachteile nicht aufweisen und den saugfähigen Materialien optimale wasser-, öl- und schmutzabweisende Eigenschaften verleihen.

Gegenstand der Erfindung sind wäßrige Zusammensetzungen für die öl- und wasserabweisende Behandlung saugfähiger Materialien, im wesentlichen bestehend aus
(A) siliciumorganischen Verbindungen, die ausgewählt werden aus
(A1) C₁-C₂₀-Alkyl-C₂-C₆-alkoxysilanen und
(A2) Organopolysiloxanen, die aus Einheiten der allgemeinen Formel (I) 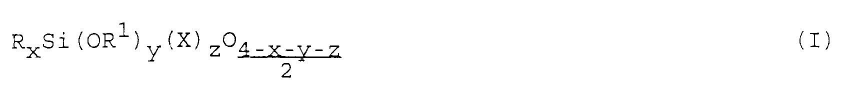 aufgebaut sind, in der
   - **R**: gleiche oder verschiedene einwertige, gegebenenfalls halogensubstituierte, SiC-gebundene C₁-C₂₀-Kohlenwasserstoffreste,
   - **R**^{**1**}: gleiche oder verschiedene einwertige C₁-C₆-Alkylreste,
   - **X**: Hydroxylgruppen oder gleiche oder verschiedene einwertige, gegebenenfalls halogensubstituierte, SiC-gebundene, basischen Stickstoff enthaltende C₁-C₃₀-Kohlenwasserstoffreste,
   - **x**: 0, 1, 2 oder 3, durchschnittlich 0,8 bis 1,8,
   - **y**: 0, 1, 2 oder 3, durchschnittlich 0,01 bis 1,2 und
   - **z**: 0, 1, 2 oder 3, durchschnittlich 0,0 bis 0,5 bedeuten, mit der Maßgabe, daß die Summe von x, y und z höchstens 3,5 beträgt,
(B) fluororganischen Verbindungen, die ausgewählt werden aus fluorierten Polyacrylaten und Polyurethanen,
(C) Tensid und
(D) Wasser.

Die siliciumorganischen Verbindungen (A) liegen in emulgierter Form vor, dringen in das saugfähige Material ein und bilden eine hydrophobe Zone aus. Die fluororganischen Verbindungen (B) liegen in dispergierter Form vor und sind in der Lage, die Poren des saugfähigen Materials an der Oberfläche so zu modifizieren, daß öl- und fetthaltige Substanzen nicht eindringen können. Gleichzeitig wird die Diffusionsfähigkeit des Substrates nicht wesentlich beeinträchtigt.

Die Kombination der Komponenten (A) und (B) führt zu einer Synergie der oleophoben und hydrophoben Effekte. Die siliciumorganischen Verbindungen der Komponente (A) dringen in das Substrat ein und die fluororganischen Verbindungen der Komponente (B) entfalten schon in geringer Konzentration optimale oleophobe Wirkung. Trotz dieser unterschiedlichen Effekte der einzelnen Komponenten ist die erfindungsgemäße Zusammensetzung in ihrer Konsistenz homogen und über Monate bis Jahre lagerstabil.

Besonders geeignete siliciumorganische Verbindungen (A) sind die als wäßrige Emulsionen vorliegenden siliciumorganischen Verbindungen, die beispielsweise beschrieben sind in US-A-5,196,054, US-A-4,648,904, US-A-5,314,533, und DE-A-43 09 971.

Vorzugsweise besitzen die C₁-C₂₀-Alkyl-C₂-C₆-alkoxysilane (A1) 1 oder 2 gleiche oder verschiedene, gegebenenfalls halogensubstituierte, über SiC-gebundene einwertige C₁-C₂₀-Alkylreste und die übrigen Reste sind gleiche oder verschiedene C₂-C₆-Alkoxyreste. Methoxysilane hydrolysieren zu schnell und verhindern eine ausreichende Lagerbeständigkeit.

Beispiele für die C₁-C₂₀-Alkylreste sind der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte C₁-C₂₀-Alkylreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest und der Heptafluorisopropylrest.

Besonders bevorzugt sind die nicht substituierten C₁-C₁₂-Alkylreste.

Beispiele für C₂-C₆-Alkoxyreste sind der Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Ethoxyreste sind besonders bevorzugt.

Die Zusammensetzung kann zusätzlich zum Alkylalkoxysilan (A1) oder an Stelle dessen ein Alkoxygruppen enthaltendes Organopolysiloxan (A2) oder ein Gemisch mehrerer Organopolysiloxane (A2) enthalten. Die Organopolysiloxane (A2) enthalten vorzugsweise Kohlenwasserstoffgruppen und können zusätzlich Hydroxylgruppen und/oder Aminogruppen enthalten, die eine Bindung an die Baustoffe erleichtern.

Vorzugsweise besitzt das Organopolysiloxan (A2) eine Viskosität von 10 mm²/s bis 50 000 mm²/s, insbesondere 20 mm²/s bis 10 000 mm²/s bei 25°C.

Bei Einsatz von Organopolysiloxan (A2) ohne gleichzeitigen Einsatz von Alkoxysilan (A1) weist das Organopolysiloxan (A2) vorzugsweise eine Viskosität von höchstens 5 000 mm²/s, insbesondere höchstens 2 000 mm²/s auf. Die Viskosität des Organopolysiloxans (A2) kann durch Abmischen mit Alkoxysilan (A1) auf vorzugsweise höchstens 5 000 mm²/s, insbesondere höchstens 2 000 mm²/s abgesenkt werden.

Beispiele für R sind die bei den Organoalkoxysilanen aufgeführten C₁-C₂₀-Kohlenwasserstoffreste. Besonders bevorzugt sind die nicht substituierten C₁-C₁₂-Alkylreste und der Phenylrest.

Beispiele für die Reste **R**^{**1**} sind der Methyl-, Ethyl-, n-Propyl-, Isopropyl-, n-Butyl-, sec.-Butyl- und tert. -Butylrest; Pentylreste, wie der n-Pentylrest und Hexylreste, wie der n-Hexylrest, wobei die Ethylreste besonders bevorzugt sind.

Bevorzugt handelt es sich bei dem basischen Stickstoff enthaltenden C₁-C₃₀-Kohlenwasserstoffrest **X** um einen Rest der allgemeinen Formel (II)

R²₂NR³- (II),

worin
- **R**^{**2**}: gleich oder verschieden sein kann und Wasserstoff oder einwertiger, gegebenenfalls substituierter C₁-C₁₀-Kohlenwasserstoffrest oder C₁-C₁₀-Aminokohlenwasserstoffrest und
- **R**^{**3**}: einen zweiwertigen C₁-C₁₅-Kohlenwasserstoffrest bedeuten.

Beispiele für Rest **R**^{**2**} sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (II) mindestens ein Wasserstoffatom gebunden.

Bevorzugt handelt es sich bei Rest **R**^{**3**} um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für den Rest **R**^{**3**} sind der Methylen-, Ethylen-, Propylen-, Butylen-, Cyclohexylen-, Octadecylen-, Phenylen- und Butenylenrest.

Bevorzugte Beispiele für Reste **X** sind
H₂N(CH₂)₃-,
H₂N(CH₂)₂NH(CH₂)₂-,
H₂N(CH₂)₂NH(CH₂)₃-,
H₂N(CH₂)₂-,
H₃CNH(CH₂)₃-,
C₂H₅NH(CH₂)₃-,
H₃CNH(CH₂)₂-,
C₂H₅NH(CH₂)₂-,
H₂N(CH₂)₄-,
H₂N(CH₂)₅-,
H(NHCH₂CH₂)₃-,
C₄H₉NH(CH₂)₂NH(CH₂)₂-,
cyclo-C₆H₁₁NH(CH₂)₃-,
cyclo-C₆H₁₁NH(CH₂)₂-,
(CH₃)₂N(CH₂)₃- ,
(CH₃)₂N(CH₂)₂- ,
(C₂H₅)₂N(CH₂)₃- und
(C₂H₅)₂N(CH₂)₂- .

Die Beispiele für Alkylreste **R**^{**1**} gelten im vollen Umfang auch für den Rest **R**^{**3**}.

Besonders bevorzugt sind die nicht halogensubstituierten Reste **R**, **R**^{**1**} und **X**.

Vorzugsweise hat **x** einen durchschnittlichen Wert von 0,9 bis 1,1. Vorzugsweise hat **y** einen durchschnittlichen Wert von 0,4 bis 1,2. Vorzugsweise hat **z** einen durchschnittlichen Wert von 0,0 bis 0,2.

Beispiele für Organopolysiloxane (A2), die keine Hydroxylgruppen oder Aminoalkylenreste aufweisen, sind solche, die durch Umsetzung von Methyltrichlorsilan und gegebenenfalls einem C₁-C₈-Alkyltrichlorsilan, oder Phenyltrichlorsilan mit Ethanol in Wasser erhältlich sind, wie die Organopolysiloxane der Summenformeln

CH₃Si(OC₂H₅)_{0,8}O_{1,1},

C₆H₅Si(OC₂H₅)_{0,72}O_{1,14}

oder

(CH₃)_{0,7}(iso-Octyl)_{0,3}Si(OC₂H₅)_{1,3}O_{0,85}.

Die Aminzahl des Organopolysiloxans (A2), welches basischen Stickstoff enthaltende C₁-C₃₀-Kohlenwasserstoffreste **X** aufweist, beträgt vorzugsweise mindestens 0,1, insbesondere mindestens 0,2, und vorzugsweise höchstens 8, insbesondere höchstens 4. Die Aminzahl bezeichnet die Anzahl der ml 1-n-HCl, die zum Neutralisieren von 1 g Organopolysiloxan (A2) erforderlich sind.

Organopolysiloxane (A2), welche basischen Stickstoff enthaltende C₁-C₃₀-Kohlenwasserstoffreste **X** aufweisen, können in bekannter Weise, beispielsweise durch Äquilibrieren bzw. Kondensieren von aminofunktionellen Silanen mit Organopolysiloxanen, die Alkoxygruppen und/oder Hydroxylgruppen enthalten und die frei von basischem Stickstoff sind, hergestellt werden.

Bei den fluororganischen Verbindungen (B) handelt es sich um polymere Verbindungen.

Als fluororganische Verbindungen (B) können beispielsweise fluorierte Acrylharze, wie Polymerisate von 1,1-Dihydroperfluorbutylacrylat und Mischpolymerisate aus fluorfreien und fluorhaltigen Acrylsäure- und Methacrylsäureestern sowie fluorierte Polyurethane wie sie beispielsweise in US-A-4,766,234 beschrieben sind, eingesetztwerden.

Bevorzugte fluorhaltige Acryl- und Methacrylsäureester weisen die allgemeine Formel (III) 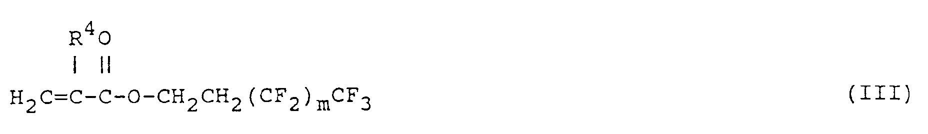 auf, in der
- **R**^{**4**}: ein Wasserstoffatom oder eine Methylgruppe und
- **m**: eine ganze Zahl im Wert von 1 bis 15 bedeuten.

Es kann sich um eine Art fluororganische Verbindung oder um ein Gemisch mehrerer Arten fluororganischer Verbindungen handeln.

Vorzugsweise bestehen mindestens 10 Gew.-%, insbesondere mindestens 20 Gew.-% der fluororganischen Verbindungen (B) aus Fluor in CF-Bindungen.

In den erfindungsgemäßen wäßrigen Zusammensetzungen müssen die fluororganischen Verbindungen (B) in Wasser dispergiert sein. Gegebenenfalls kann die erfindungsgemäße wäßrige Zusammensetzung bis zu 15 Gew.-%, insbesondere bis zu 10 Gew.-% organische Lösungsmittel (E) enthalten, die die Dispergierbarkeit der fluororganischen Verbindungen (B) verbessern.

Beispiele für organisches Lösemittel (E), welches die Dispergierbarkeit der fluororganischen Verbindungen (B) verbessert sind Ethylenglykol, Isopropanol, Aceton, Methylethylketon, Butylacetat, Butylglykolacetat und N-Methylpyrrolidon.

Das Tensid (C) dient als Emulgator für die siliciumorganischen Verbindungen (A) und als Dispersionsmittel für die fluororganischen Verbindungen (B). Als Tensid (C) können die für Bautenschutzemulsionen und -dispersionen üblichen Tenside eingesetzt werden.

Als anionische Tenside (C) eignen sich besonders:
1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)- bzw. Propylenoxid(PO)einheiten.
2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.
3. Alkali- und Ammoniumsalze von Carbonsäuren mit 8 bis 20 C-Atomen im Alkyl-, Aryl-, Alkaryl- oder Aralkylrest.
4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.
   Als nichtionische Tenside (C) eignen sich besonders:
5. Polyvinylalkohol, der noch 5 bis 50 %, vorzugsweise 8 bis 20 % Vinylacetateinheiten aufweist, mit einem Polymerisationsgrad von 500 bis 3000.
6. Alkylpolyglycolether, vorzugsweise solche mit 8 bis 40 EO-Einheiten und Alkylresten von 8 bis 20 C-Atomen.
7. Alkylarylpolyglycolether, vorzugsweise solche mit 8 bis 40 EO-Einheiten und 8 bis 20 C-Atomen in den Alkyl- und Arylresten.
8. Ethylenoxid/Propylenoxid(EO/PO)-Blockcopolymere, vorzugsweise solche mit 8 bis 40 EO- bzw. PO-Einheiten.
9. Additionsprodukte von Alkylaminen mit Alkylresten von 8 bis 22 C-Atomen mit Ethylenoxid oder Propylenoxid.
10. Fettsäuren mit 6 bis 24 C-Atomen.
11. Alkylpolyglykoside der allgemeinen Formel R*-O-Zₒ, worin R* einen linearen oder verzweigten, gesättigten oder ungesättigten Alkylrest mit im Mittel 8 - 24 C-Atomen und Zₒ einen Oligoglykosidrest mit im Mittel o = 1 - 10 Hexose- oder Pentoseeinheiten oder Gemischen davon bedeuten.
12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.
13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.
   Als kationische Tenside (C) eignen sich besonders:
14. Salze von primären, sekundären und tertiären Fettaminen mit 8 bis 24 C-Atomen mit Essigsäure, Schwefelsäure, Salzsäure und Phosphorsäuren.
15. Quarternäre Alkyl- und Alkylbenzolammoniumsalze, insbesondere solche, deren Alkylgruppe 6 bis 24 C-Atome besitzt, insbesondere die Halogenide, Sulfate, Phosphate und Acetate.
16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.
   Als ampholytische Tenside (C) eignen sich besonders:
17. Langkettig substituierte Aminosäuren, wie N-Alkyl-di-(aminoethyl-)glycin oder N-Alkyl-2-aminopropionsäuresalze.
18. Betaine, wie N-(3-Acylamidopropyl)-N,N-dimethylammoniumsalze mit einem C₈-C₁₈-Acylrest und Alkyl-imidazolium-Betaine.

Bevorzugt als Tenside (C) sind nichtionische Emulgatoren, insbesondere die vorstehend unter 9. aufgeführten Additionsprodukte von Alkylaminen mit Ethylenoxid oder Propylenoxid, die vorstehend unter 11. aufgeführten Alkylpolyglykoside und der vorstehend unter 5. aufgeführte Polyvinylalkohol. Besonders bevorzugte Polyvinylalkohole enthalten noch 5 bis 20 %, insbesondere 10 bis 15 % Vinylacetateinheiten und weisen vorzugsweise einen Polymerisationsgrad von 500 bis 3000, insbesondere von 1200 bis 2000 auf.

Die Gesamtmenge der Komponenten (A) und (B) in den wässrigen Zusammensetzungen beträgt vorzugsweise 1 bis 70 Gew.-%, insbesondere 2 bis 50 Gew.-%.

Der Anteil des Tensids (C) beträgt bevorzugt mindestens 0,1, insbesondere mindestens 2 Gewichtsteile und höchstens 30, insbesondere höchstens 10 Gewichtsteile, bezogen auf 100 Gewichtsteile der Summe der Komponenten (A) und (B).

Die Gesamtmenge der Komponente (A) in der erfindungsgemäßen wäßrigen Zusammensetzung beträgt bevorzugt mindestens 50, insbesondere mindestens 70 Gewichtsteile und höchstens 99, insbesondere höchstens 95 Gewichtsteile, bezogen auf 100 Gewichtsteile der Summe der Komponenten (A) und (B).

Die Gesamtmenge der Komponente (B) in der erfindungsgemäßen wäßrigen Zusammensetzung beträgt bevorzugt mindestens 1, insbesondere mindestens 5 Gewichtsteile und höchstens 50, insbesondere höchstens 30 Gewichtsteile, bezogen auf 100 Gewichtsteile der Summe der Komponenten (A) und (B).

Die erfindungsgemäße Zusammensetzung enthält bevorzugt mindestens 50, insbesondere mindestens 100 Gewichtsteile und höchstens 10 000, insbesondere höchstens 5 000 Gewichtsteile Wasser (D) bezogen auf 100 Gewichtsteile der Summe der Komponenten (A) und (B).

Die erfindungsgemäßen Zusammensetzungen können neben den Komponenten (A) und (B) noch Zusatzstoffe (F), wie Konservierungsmittel, Dispergierungsmittel und Puffersubstanzen enthalten. Die erfindungsgemäßen Zusammensetzungen enthalten insgesamt höchstens 5 Gewichtsteile Zusatzstoffe (F) bezogen auf 100 Gewichtsteile der Summe der Komponenten (A) und (B).

Bevorzugt beträgt der pH-Wert der erfindungsgemäßen Zusammensetzungen 4 bis 9, besonders bevorzugt 5 bis 8.

Die erfindungsgemäßen Zusammensetzungen werden bevorzugt durch einfaches Zusammenrühren einer Emulsion der Komponente (A) und einer Dispersion der Komponente (B) und gegebenenfalls Wasser in beliebiger Reihenfolge hergestellt. Die Herstellung kann aber auch in der Weise erfolgen, daß die fluororganischen Verbindungen (B) bzw. eine Lösung der Verbindungen (B) unter Anwendung von Scherkräften in eine Emulsion der Komponente (A) hineinemulgiert werden. Analog dazu ist der umgekehrte Weg möglich, d.h. die siliciumorganischen Verbindungen (A) werden in die wäßrige Dispersion der fluororganischen Verbindungen (B) hineinemulgiert. Und schließlich können auch die siliciumorganischen Verbindungen (A) und die fluororganischen Verbindungen (B) sowie gegebenenfalls organische Lösemittel (E) gemischt und in einem herkömmlichen Emulgierprozeß in Wasser (D) dispergiert werden.

Ebenfalls Gegenstand der Erfindung ist ein Verfahren zur wasser- und ölabweisenden Behandlung saugfähiger Substrate, wie mineralische Baustoffe oder Holz, bei dem die wäßrigen Zusammensetzungen auf die saugfähigen Substrate aufgetragen werden. Unter Saugfähigkeit ist dabei zu verstehen, daß das betreffende Material in der Lage ist, über den Weg des kapillaren Saugens wenigstens 0,1 % seines Gewichtes an Flüssigkeit aufzunehmen. Beispiele für saugfähige Materialien sind mineralische Baustoffe wie Beton, Ton, Ziegel, keramische Fliesen, Faserzementplatten, Kalksandsteine, Sandsteine, Kalksteine, Marmor, Travertine, Granit sowie nicht-mineralische Baustoffe, insbesondere Holz und cellulosehaltige Materialien.

Das Aufbringen der erfindungsgemäßen wäßrigen Zusammensetzungen kann in beliebiger Weise, wie beispielsweise durch Aufsprühen, Gießen, Streichen, Walzen oder Tauchen, erfolgen. Mit den erfindungsgemäßen wäßrigen Zusammensetzungen wird sehr einfach mit geringem Materialaufwand hervorragende und langzeitbeständige Wasser- und Ölabweisung erzielt. An den mit den erfindungsgemäßen wäßrigen Zusammensetzungen behandelten Substraten wird das kapillare Aufsaugen von Wasser und in Wasser gelösten Schadstoffen sowie Öl und oleophilen Substanzen reduziert bzw. unterbunden, ohne daß die Poren und Kapillaren der Substrate verschlossen werden. Die Atmungsfähigkeit der Substrate bleibt also erhalten.

Da die erfindungsgemäßen Zusammensetzungen Wasser als Trägermedium aufweisen, ist die Handhabung wesentlich einfacher und gefahrloser als bei vergleichbaren Produkten auf Basis organischer Lösemittel.

### Beispiele

Anhand der folgenden Beispiele wird die Erfindung näher erläutert. Alle Angaben von Teilen und Prozentsätzen beziehen sich auf das Gewicht. Die Beispiele werden bei einem Druck der umgebenden Atmosphäre, also etwa bei 1000 hPa, und bei Raumtemperatur, also etwa bei 23 °C, durchgeführt. Die mit den erfindungsgemäßen Zusammensetzungen behandelten Substrate sind vor Verwendung mindestens 28 Tage im Normklima (23 °C/50 % relative Luftfeuchtigkeit) gelagert worden.

### Herstellung der erfindungsgemäßen Zusammensetzungen

Die in den nachfolgenden Beispielen verwendeten erfindungsgemäßen Zusammensetzungen werden durch einfaches Abmischen der Emulsionen der Komponenten (A) und Dispersionen der Komponenten (B) ohne Anwendung von Scherkräften hergestellt. Folgende Ausgangsmaterialien werden verwendet:

### Komponente (A):

A 1)
   40 %ige Emulsion von n-Octyltriethoxysilan (ENVIROSEAL® 40 von Thoro System Products, Mol, Belgien).
A 2)
   70 %ige Emulsion von iso-Octyltriethoxysilan und aminofunktionellem Polysiloxan: 160 g eines Kondensationsproduktes von α, ω-Dihydroxypolydimethylsiloxan und N-(2-Aminoethyl)-3-aminopropyltrimethoxysilan, das bei 25 °C eine Viskosität von ca. 1,5 mm²/s und eine Aminzahl von 0,6 aufweist, werden in einer schnellaufenden Stator-Rotor-Rührvorrichtung mit einem Gemisch von 15 g eines Umsetzungsproduktes von Stearylamin und Ethylenoxid (Genamin® S 200 von Hoechst AG, Frankfurt) und 30 g eines Butylalkoholglykosids (Glukopon® 225 von Henkel KGaA, Düsseldorf) in 95 g Wasser emulgiert. Anschließend werden in diese Emulsion 540 g iso-Octyltriethoxysilan eingemischt und 160 g Wasser zugegeben.
A 3)
   50 %ige Emulsion von iso-Octyltriethoxysilan und oligomerem Methylalkoxysiloxan: Ein Gemisch aus 400 g iso-Octyltriethoxysilan und 100 g Methylalkoxysiloxan der Summenformel CH₃Si(OC₂H₅)_{0,8}O_{1,1} mit einem durchschnittlichem Molekulargewicht von ca. 650 g/Mol und einer Viskosität von ca. 20 mm²/s wird in einer schnellaufenden Stator-Rotor-Rührvorrichtung mit einer Lösung von 25 g Iso-tridecylalkohol-(16)-polyglykolether (Arlypon® IT 16 von Chemische Fabrik Grünau GmbH, Illertissen) in 475 g Wasser emulgiert.

### Komponente (B)

B 1)
   20 %ige Dispersion eines Perfluoralkylgruppen enthaltenden Polyurethans (Nuva® LB von Hoechst AG, Frankfurt).
B 2)
   25 %ige Zubereitung eines fluorierten Acrylharzes in Wasser (Foraperle® 321 von Elf Atochem Deutschland GmbH).

### Anwendungsbeispiel 1

Auf unglasierte Terrakotta-Platten werden ca. 300 g/m² der in Tabelle 1 angegebenen Zusammensetzungen durch Streichen aufgetragen. Nach 7 Tagen Trocknungszeit bei Raumtemperatur werden Wasser- und Ölabweisung geprüft. Dazu werden auf jede Platte 5 Wassertropfen und 5 Sojaöltropfen (Volumen jeweils ca. 0,2 ml) aufgetragen. Zur Charakterisierung der wasserabweisenden Wirkung wird 15 Minuten nach Auftrag der Randwinkel der Wassertropfen - soweit noch nicht aufgesogen - bestimmt. Für die Charakterisierung der ölabweisenden Wirkung werden die Tropfen nacheinander abgewischt (nach 1 Minute, 1 h, 8 h, 24 h und 72 h) und der zurückbleibende Fleck beurteilt (1 = kein Fleck erkennbar, 2 = leichter Fleck, 3 = deutlicher Fleck, 4 = starker Fleck, 5 = Öltropfen vor Prüfung bereits aufgesogen).

**Tabelle 1**

| **Produkt-Nr.:** | **Imprägniermittel- Zusammensetzung (Gewichtsteile)** | **Wasserabweisung (Randwinkel nach 15 Min.)** | **Ölabweisung (Fleckbildung)** | | | | |
|---|---|---|---|---|---|---|---|
| | | | **1 Minute** | **1 h** | **8 h** | **24 h** | **72 h** |
| Z 1 | 0,13 A 1 + 0,87 H₂O | 40 ° | 2 | 3 | 4 | 5 | 5 |
| Z 2 | 0,07 A 2 + 0,93 H₂O | 120 ° | 3 | 3 - 4 | 4 - 5 | 5 | 5 |
| Z 3 | 0,10 A 3 + 0,9 H₂O | 120 ° | 2 | 3 | 4 | 5 | 5 |
| Z 4 | 0,06 B 1 + 0,94 H₂O | 100 ° | 1 | 1 - 2 | 2 | 2 | 3 |
| Z 5 | 0,05 B 2 + 0,95 H₂O | 120 ° | 1 | 1 | 1 | 1 | 1 |
| Z 6 | 0,10 A 1 + 0,06 B 1 + 0,84 H₂O | 100 ° | 1 | 1 | 1 | 1 | 1 |
| Z 7 | 0,10 A 1 + 0,05 B 2 + 0,85 H₂O | 120 ° | 1 | 1 | 1 | 1 | 1 |
| Z 8 | 0,08 A 2 + 0,06 B 1 + 0,86 H₂O | 130 ° | 1 | 1 | 1 | 1 | 1 |
| Z 9 | 0,04 A 2 + 0,03 B 1 + 0,93 H₂O | 120 ° | 1 | 1 | 1 | 1 - 2 | 2 |
| Z 10 | 0,14 A 3 + 0,05 B 1 + 0,81 H₂O | 135 ° | 1 | 1 | 1 | 1 | 1 |
| unbehandelt | | aufgesogen | 4 | 5 | 5 | 5 | 5 |
| Z 6 - Z 10: erfindungsgemäße Zusammensetzungen Z 1 - Z 5: Vergleichsbeispiele | | | | | | | |

### Schlußfolgerungen

Die erfindungsgemäßen Zusammensetzungen Z 6 bis Z 10 ergeben gute Ölabweisung. Ein Vergleich von Z 5 und Z 7 zeigt, daß die gute ölabweisende Wirkung der fluororganischen Komponente B 2 durch die siliciumorganische Komponente A 1 keinesfalls beeinträchtigt wird. Im Falle von B 1 ist sogar ein positiver Einfluß der siliciumorganischen Verbindungen auf die ölabweisende Eigenschaften erkennbar (vgl. Z 4, Z 6 und Z 8 - Z 10).

### Anwendungsbeispiel 2

Kalksandsteinwürfel der Kantenlänge 5 cm werden 5 Minuten in die in Tabelle 1 angegebenen Imprägniermittel Z 1 - Z 10 (Beispiel 1) getaucht (5 cm Flüssigkeitsüberstand). Dabei wird eine Imprägniermittelaufnahme von ca. 400 g/m² erreicht. Nach 7 Tagen Trocknungszeit werden Wasser- und Ölabweisung wie in Beispiel 1 geprüft. Zusätzlich wird die kapillare Wasseraufnahme (in Gew.-%) durch 24stündiges Tauchen der Prüfkörper in Wasser (5 cm Wasserüberstand) bestimmt.

**Tabelle 2**

| **Imprägnierungsmittel** | **Wasserabweisung** | | **Ölabweisung** | | | | |
|---|---|---|---|---|---|---|---|
| | **Randwinkel nach 30 Min.** | **Wasseraufn. n. 24 h Tauchen** | **1 Min.** | **1 h** | **8 h** | **24 h** | **72 h** |
| Z 1 | 70 ° | 2,5 % | 4 | 5 | 5 | 5 | 5 |
| Z 2 | 140 ° | 1,7 % | 4 | 5 | 5 | 5 | 5 |
| Z 3 | 135 ° | 1,5 % | 4 | 5 | 5 | 5 | 5 |
| Z 4 | 105 ° | 11,4 % | 1 | 1-2 | 2 | 2-3 | 3 |
| Z 5 | 125 ° | 11,8 % | 1 | 1 | 1-2 | 2 | 2-3 |
| Z 6 | 110 ° | 2,3 % | 1 | 1 | 1 | 1-2 | 2 |
| Z 7 | 120 ° | 2,0 % | 1 | 1 | 1 | 1-2 | 2 |
| Z 8 | 140 ° | 1,3 % | 1 | 1 | 1 | 1-2 | 2 |
| Z 9 | 140 ° | 2,1 % | 1 | 1-2 | 2 | 2-3 | 3 |
| Z 10 | 145 ° | 0,9 % | 1 | 1 | 1-2 | 2 | 2-3 |
| unbehandelt | aufgesogen | 13,0 % | 5 | 5 | 5 | 5 | 5 |

### Schlußfolgerungen

Wie in Beispiel 1 liefern die Fluorkomponenten B 1 und B 2 (Z 4 und Z 5) sowie die daraus hergestellten erfindungsgemäßen Zusammensetzungen Z 6 - Z 10 über einige Stunden gute Ölabweisung. Nach 72 Stunden ist aber selbst bei diesen zumindest ein leichter Fleck erkennbar, da das Substrat sehr porös ist. Ein Vergleich von den Zusammensetzungen Z 4 und Z 5, die nur die Fluorkomponente enthalten, mit den erfindungsgemäßen Zusammensetzungen Z 6 - Z 10 zeigt, daß die Fluorkomponenten die Benetzung der Oberfläche mit Wasser zwar reduzieren, eine akzeptable Hydrophobie, d.h. Reduktion der Wasseraufnahme wird aber nur durch die siliciumorganischen Komponenten A 1 - A 3 in den erfindungsgemäßen Zusammensetzungen erreicht.

### Anwendungsbeispiel 3

Auf Granitprobekörper werden ca. 50 g/m² der Imprägniermittel Z 8 und Z 10 (Tabelle 1, Beispiel 1) durch Streichen aufgebracht. Nach 7 Tagen Trocknungszeit werden auf die so behandelten Flächen und auf unbehandelten Granit Wasser und Sojaöl aufgetropft (pro Tropfen jeweils ca. 0,2 ml). Während auf dem unbehandelten Stein die Tropfen innerhalb von Sekunden auseinanderfließen, bleiben sie auf den imprägnierten Oberflächen unverändert (Kontaktwinkel nach 1 h: Wasser > 130 °, Öl > 100 °).

### Anwendungsbeispiel 4

2 unglasierte Terrakotta-Platten werden zur Hälfte mit den Zusammensetzungen Z 2 und Z 8 aus Beispiel 1 bestrichen. Nach 1 Woche Trocknungszeit werden die Platten sowohl auf dem nichtbehandelten wie auch auf dem behandelten Teil mit Filzstift (Edding® 3000) beschmiert. 2 Stunden später werden die Oberflächen mit Ethanol gereinigt. Nur auf der mit Z 8 behandelten Fläche sind die Filzstiftschmierereien rückstandslos zu entfernen, während auf der unbehandelten und der mit Z 2 behandelten Fläche nur eine teilweise Entfernung der Farbe möglich ist. Dieses Beispiel demonstriert die Eignung der erfindungsgemäßen Zusammensetzungen als Graffitischutz.

## Patentansprüche

1. Wäßrige Zusammensetzungen für die öl- und wasserabweisende Behandlung saugfähiger Materialien, im wesentlichen bestehend aus
(A) siliciumorganischen Verbindungen, die ausgewählt werden aus
(A1) C₁-C₂₀-Alkyl-C₂-C₆-alkoxysilanen und
(A2) Organopolysiloxanen, die aus Einheiten der allgemeinen Formel (I) 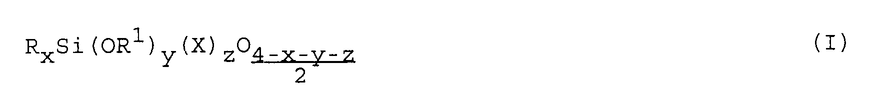 aufgebaut sind, in der
**R** gleiche oder verschiedene einwertige, gegebenenfalls halogensubstituierte, SiC-gebundene C₁-C₂₀-Kohlenwasserstoffreste,
**R**^{**1**} gleiche oder verschiedene einwertige C₁-C₆-Alkylreste,
**X** Hydroxylgruppen oder gleiche oder verschiedene einwertige, gegebenenfalls halogensubstituierte, SiC-gebundene, basischen Stickstoff enthaltende C₁-C₃₀-Kohlenwasserstoffreste,
**x** 0, 1, 2 oder 3, durchschnittlich 0,8 bis 1,8,
**y** 0, 1, 2 oder 3, durchschnittlich 0,01 bis 1,2 und
**z** 0, 1, 2 oder 3, durchschnittlich 0,0 bis 0,5 bedeuten, mit der Maßgabe, daß die Summe von x, y und z höchstens 3,5 beträgt,
(B) fluororganischen Verbindungen, die ausgewählt werden aus fluorierten Polyacrylaten und Polyurethanen,
(C) Tensid und
(D) Wasser.

2. Wäßrige Zusammensetzungen nach Anspruch 1, bei denen die C₁-C₂₀-Alkyl-C₂-C₆-alkoxysilane (A1) 1 oder 2 gleiche oder verschiedene, gegebenenfalls halogensubstituierte, über SiC-gebundene einwertige C₁-C₂₀-Alkylreste aufweisen und die übrigen Reste gleiche oder verschiedene C₂-C₆-Alkoxyreste sind.

3. Wäßrige Zusammensetzungen nach Anspruch 1 oder 2, bei denen das Organopolysiloxan (A2) eine Viskosität von 10 mm²/s bis 50 000 mm²/s besitzt.

4. Wäßrige Zusammensetzungen nach einem der Ansprüche 1 bis 3, bei denen als fluororganische Verbindungen (B) aus mindestens zum Teil fluorhaltigen Monomeren hergestellte Polymere eingesetzt werden.

5. Wäßrige Zusammensetzungen nach einem der Ansprüche 1 bis 4, bei denen mindestens 10 Gew.-%, der fluororganischen Verbindungen (B) aus Fluor in CF-Bindungen besteht.

6. Wäßrige Zusammensetzungen nach einem der Ansprüche 1 bis 5, bei denen die Gesamtmenge der Komponente (A) mindestens 50 Gewichtsteile und höchstens 99 Gewichtsteile, bezogen auf 100 Gewichtsteile der Summe der Komponenten (A) und (B) beträgt.

7. Verfahren zur wasser- und ölabweisenden Behandlung saugfähiger Substrate, bei dem die wäßrigen Zusammensetzungen gemäß einem der Ansprüche 1 bis 6 auf die saugfähigen Substrate aufgetragen werden.

## Claims

1. Aqueous compositions for rendering absorbent materials oil-repellent and water-repellent, the said compositions essentially consisting of
(A) organosilicon compounds selected from
(A1) C₁-C₂₀-alkyl-C₂-C₆-alkoxysilanes and
(A2) organopolysiloxanes which are composed of units of the general formula (I) 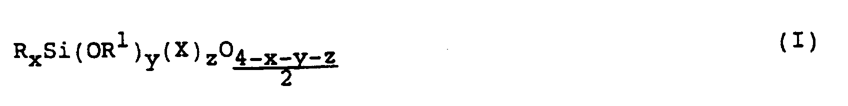 in which
R are identical or different monovalent, optionally halogen-substituted C₁-C₂₀ hydrocarbon radicals with SiC bonds,
R¹ are identical or different monovalent C₁-C₆-alkyl radicals,
X are hydroxyl groups or identical or different monovalent, optionally halogen-substituted C₁-C₃₀ hydrocarbon radicals with SiC bonds and containing basic nitrogen,
x is 0, 1, 2 or 3, on average 0.8 to 1.8,
y is 0, 1, 2 or 3, on average 0.01 to 2.0, and
z is 0, 1, 2 or 3, on average 0.0 to 0.5, with the proviso that the sum of x, y and z is at most 3.5,
(B) organofluorine compounds which are selected from fluorinated polyacrylates and polyurethanes,
(C) surfactant and
(D) water.

2. Aqueous compositions according to Claim 1, characterized in that the C₁-C₂₀-alkyl-C₂-C₆-alkoxysilanes (A1) have 1 or 2 identical or different, optionally halogen-substituted, monovalent C₁-C₂₀-alkyl radicals with SiC bonds, and the other radicals are identical or different C₂-C₆-alkoxy radicals.

3. Aqueous compositions according to one of Claims 1 or 2, characterized in that the organopolysiloxane (A2) has a viscosity of 10 mm²/s to 50,000 mm²/s.

4. Aqueous compositions according to one of Claims 1 to 3, characterized in that polymers prepared from at least partially fluorinated monomers are used as the organofluorine compounds (B).

5. Aqueous compositions according to one of Claims 1 to 4, characterized in that at least 10% by weight of the organofluorine compounds (B) consists of fluorine in CF bonds.

6. Aqueous composition according to one of Claims 1 to 5, characterized in that the total amount of component (A) is at least 50 parts by weight and at most 99 parts by weight, based on 100 parts by weight of the sum of components (A) and (B).

7. Process for rendering absorbent substrates water-repellent and oil-repellent, characterized in that the aqueous compositions according to one of Claims 1 to 6 are applied to the absorbent substrates.

## Revendications

1. Compositions aqueuses pour le traitement oléophobe et hydrophobe de matériaux absorbants, étant essentiellement constituées de :
(A) composés organosiliciés qui sont choisis parmi des
(A1) (alkyl en C₁-C₂₀)(alkoxy en C₂-C₆)silanes et
(A2) organopolysiloxanes qui sont formés d'unités de formule générale (I)
RₓSi(OR¹)_{y}(X)_{z}O_{(4-x-y-z)/2} (I)
dans laquelle
R signifie des radicaux hydrocarbonés en C₁-C₂₀ monovalents a liaison SiC identiques ou différents, le cas échéant substitués par halogène ;
R¹ signifie des radicaux alkyle en C₁-C₆ monovalents identiques ou différents ;
X signifie des groupements hydroxyle ou des radicaux hydrocarbonés en C₁-C₃₀ monovalents à liaison SiC identiques ou différents, le cas échéant substitués par halogène, contenant de l'azote basique ;
x signifie 0, 1, 2 ou 3, en moyenne 0,8 à 1,8 ;
y signifie 0, 1, 2 ou 3, en moyenne 0,01 à 1,2 et
z signifie 0, 1, 2 ou 3, en moyenne 0,0 à 0,5, pourvu que la somme de x, y et z vale au maximum 3,5 ;
(B) composés organofluorés, qui sont choisis parmi des polyacrylates fluorés et des polyuréthannes fluorés ;
(C) surfactant, et
(D) l'eau.

2. Compositions aqueuses suivant la revendication 1, dans lesquelles les (alkyl en C₁-C₂₀)(alkoxy en C₂-C₆)silanes (A1) présentent 1 ou 2 radicaux alkyle en C₁-C₂₀ monovalents à liaison SiC identiques ou différents, le cas échéant substitués par halogène, et les autres radicaux sont des radicaux alkoxy en C₂-C₆ identiques ou différents.

3. Compositions aqueuses suivant la revendication 1 ou 2, dans lesquelles l'organopolysiloxane (A2) possède une viscosité de 10 mm²/s à 50 000 mm²/s.

4. Compositions aqueuses suivant l'une des revendications 1 à 3, dans lesquelles on utilise des polymères préparés à partir de monomères au moins partiellement fluorés comme composés organofluorés (B).

5. Compositions aqueuses suivant l'une des revendications 1 à 4, dans lesquelles au moins 10% en poids des composés organofluorés (B) sont constitués de fluor dans des liaisons CF.

6. Compositions aqueuses suivant l'une des revendications 1 à 5, dans lesquelles la quantité totale du composant (A) vaut au moins 50 parties en poids et au plus 99 parties en poids, sur la base de 100 parties en poids de la somme des composants (A) et (B).

7. Procédé de traitement hydrophobe et oléophobe de substrats absorbants, dans lequel on applique les compositions aqueuses suivant l'une des revendications 1 à 6 sur les substrats absorbants.
